# EUROPÄISCHE PATENTSCHRIFT

(11) **EP 2 134 578 B1**
(45) Veröffentlichungstag und Bekanntmachung des Hinweises auf die Patenterteilung: **13.07.2011**
(21) Anmeldenummer: 08709198.9
(22) Anmeldetag: 25.02.2008
(51) Int. Cl.: B60T 8/36, G01L 19/00

(54) **ANSCHLUSSEINHEIT FÜR EINE DRUCKMESSZELLE**
CONNECTOR UNIT FOR A PRESSURE MEASUREMENT CELL
UNITÉ DE RACCORDEMENT POUR CELLULE DE MESURE DE PRESSION

(30) Priorität: 05.04.2007 DE 102007016473
(43) Veröffentlichungstag der Anmeldung: 23.12.2009
(73) Patentinhaber: Robert Bosch GmbH, 70442 Stuttgart (DE)
(72) Erfinder: HOFSAESS, Michael, 71665 Vaihingen/Enz (DE); ROHDE, Hartmut, 87448 Waltenhofen (DE); KAISER, Harry, 71706 Markgroeningen (DE); BERNHARD, Winfried, Suzhou / Jiangsu (CN); FLUCK, Tobias, 224-8501 (JP); ZINTH, Peter, 87474 Buchenberg (DE)
(86) Internationale Anmeldenummer: PCT/EP2008/052230
(87) Internationale Veröffentlichungsnummer: WO 2008/122464

(56) Entgegenhaltungen:
- EP-A- 0 797 085
- WO-A-96/33081
- DE-A1-102004 033 846
- US-B1- 6 227 055
- US-B1- 6 536 286

## Beschreibung

Die Erfindung geht aus von einer Anschlusseinheit für eine Druckmesszelle nach der Gattung des unabhängigen Anspruchs. Aus der DE 10 2004 033 846 A1 ist bereits ein Ventil mit integriertem Drucksensor bekannt. In einem Ventil zur Steuerung von Fluiden, wie beispielsweise für Bremsanlagen eines Kraftfahrzeugs, ist ein Drucksensor integriert, um den Druck des durch das Ventil gesteuerten Fluids zu erfassen. Durch eine Bohrung im Polkern des Ventildoms wird der Druck der Hydraulikflüssigkeit auf die Messmembran der Messzelle übertragen. In einer Leiterplatte sind mehrere Durchgangsbohrungen ausgebildet, durch welche die elektrischen Kontakte des Drucksensors und/oder des elektrischen Teils des Ventils hindurchgeführt sind. Eine Kontaktierung des Drucksensors erfolgt beispielsweise über Bonds.

EP 0 797 085 A zeigt einen Drucksensor mit einem Körper, der eine zentrale Öffnung aufweist. Über der zentralen Öffnung ist ein Schichtaufbau aus einem elastischen Mittel, einer mikroelektronischen Schaltung mit einem Dehnmessstreifen und einem Träger angeordnet. Auf dem Träger ist eine Schaltung angeordnet. Eine Kunststoffhülle ist so auf dem Körper aufgesetzt, dass sie den Träger mit der Schaltung überspannt. Die Kunststoffhülle weist einen Kontakt auf, der über eine Drahtverbindung mit der Schaltung des Trägers verbunden ist. Ebenso ist die Schaltung des Trägers über eine Drahtverbindung mit der mikroelektronischen Schaltung verbunden.

WO 96/33081 A befasst sich mit einer hydraulischen Kraftfahrzeugbremsanlage. In einem Gehäuse sind eine Mehrzahl von Druckmodulationsventilen und benachbart dazu ein Drucksensor angeordnet.

US 6 227 055 B1 beschreibt eine Drucksensoreinrichtung, die ein Anschlussstück mit einem Außengewinde aufweist, mit dem die Drucksensoreinrichtung an einem Druckbehälter befestigt werden kann.

US-B1-6 536 286 befasst sich mit einem Stecker eines Drucksensors.

Es ist Aufgabe der vorliegenden Erfindung, eine Anschlusseinheit für eine Druckmesszelle anzugeben, welche eine leichte Austauschbarkeit gewährleistet. Diese Aufgabe wird durch die Merkmale des unabhängigen Anspruchs gelöst.

### Vorteile der Erfindung

Die erfindungsgemäße Anschlusseinheit für eine Druckmesszelle gemäß den Merkmalen des unabhängigen Anspruchs hat demgegenüber den Vorteil, dass sie besonders kompakt aufgebaut ist. Durch den geringen Außendurchmesser wird es möglich, dass eine Magnetspule eines Magnetventils im Tauschfall über die Anschlusseinheit mit Druckmesszelle geschoben werden kann. Weiterhin zeichnet sich die Baugruppe dank der kompakten Bauweise durch große mechanische Festigkeit auf, was sich insbesondere im Austauschfall eines an dem Druckmesszelle angeschlossenen Anbausteuergeräts positiv auswirkt. Weiterhin ermöglicht die Baugruppe eine trennbare Verbindung zwischen Druckmesszelle und dem Anbausteuergerät. Durch die kompakte Bauweise der Anschlusseinheit für den Druckmesszelle können auch Herstellkosten reduziert werden.

In einer zweckmäßigen Weiterbildung ist vorgesehen, dass der Schaltungsträger zumindest einen ringförmigen Abschnitt aufweist, der die Druckmesszelle zumindest teilweise umschließt. Dadurch wird die Druckmesszelle einerseits vor Umwelteinflüssen geschützt. Außerdem verringert die ineinander geschachtelte Bauweise die Bauhöhe des Drucksensors.

In einer zweckmäßigen Weiterbildung ist vorgesehen, dass der Schaltungsträger zumindest eine vorzugsweise rechteckförmige Erhöhung aufweist, die zumindest teilweise den Anschlusspunkt der Druckmesszelle überdeckt. Zweckmäßiger Weise weist die rechteckförmige Erhöhung zumindest eine Ausnehmung auf, über die zumindest eine elektrische Verbindung vom Anschlusspunkt zu Schaltung und/oder elektronischem Bauteil herausgeführt ist. Dadurch wird die Messbrücke der Druckmesszelle einerseits geschützt, andererseits können die elektrischen Verbindungen sicher von den Anschlusspunkten der Messbrücke zu der Schaltung oder elektronischem Bauteil herausgeführt werden. Weiterhin ermöglicht die Ausnehmung das Aufbringen von Leitkleber zur Kontaktierung der elektrischen Verbindung mit dem Anschlusspunkt.

In einer zweckmäßigen Weiterbildung ist vorgesehen, dass der Schaltungsträger einen vorzugsweise rechteckförmigen Aufnahmebereich aufweist, an dem Schaltung und/oder elektronisches Bauteils angeordnet sind. An der Stirnseite des vorzugsweise rechteckförmigen Aufnahmebereichs ist zumindest ein Leitkleberpunkt angeordnet ist, über den ein Ausgangssignal der Schaltung und/oder elektronischen Bauteils über den Stecker abgreifbar ist. Diese Bauform lässt hinreichend Raum für die Bestückung mit integrierter Schaltung und elektronischen Bauteilen und kann gut mit dem Stecker über die Seitenführungen und Leitkleberpunkte verbunden werden.

Vorzugsweise ist der Schaltungsträger in MID-Technik (Moulded Interconnect Device) hergestellt. Dadurch kann kostengünstig eine besonders kompakte Struktur hergestellt werden.

In einer zweckmäßigen Weiterbildung weist der Schaltungsträger zumindest eine Nut auf, die mit einer Nase der Druckmesszelle zusammenwirkt. Die an der Innenseite des Schaltungsträgers angeordnete Nut dient der lagegerechten Anordnung des Schaltungsträgers auf der Druckmesszelle.

Zweckmäßige Weiterbildungen ergeben sich aus weiteren abhängigen Ansprüchen und aus der Beschreibung.

### Beschreibung des Ausführungsbeispiels

Ein Ausführungsbeispiel der Anschlusseinheit für eine Druckmesszelle ist in der Zeichnung dargestellt und wird nachfolgend näher erläutert.

Es zeigen:

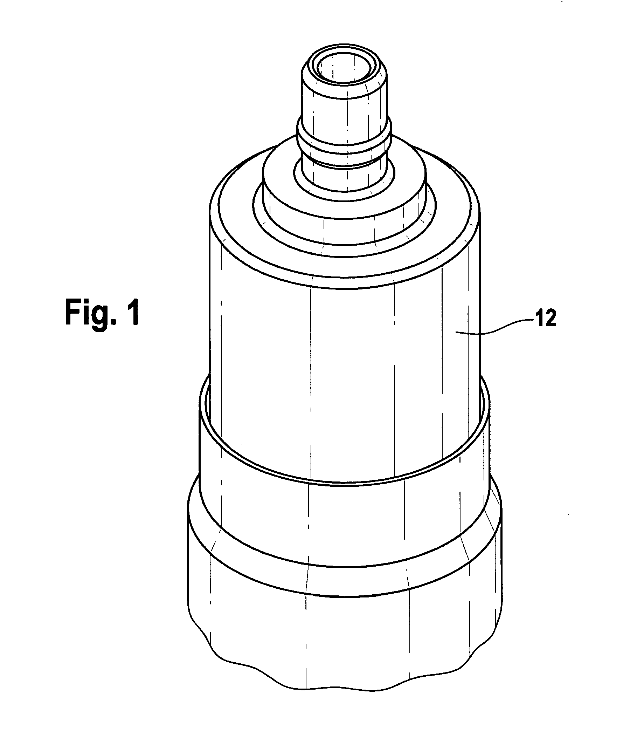

- Figur 1: eine perspektivische Darstellung des Polkerns,

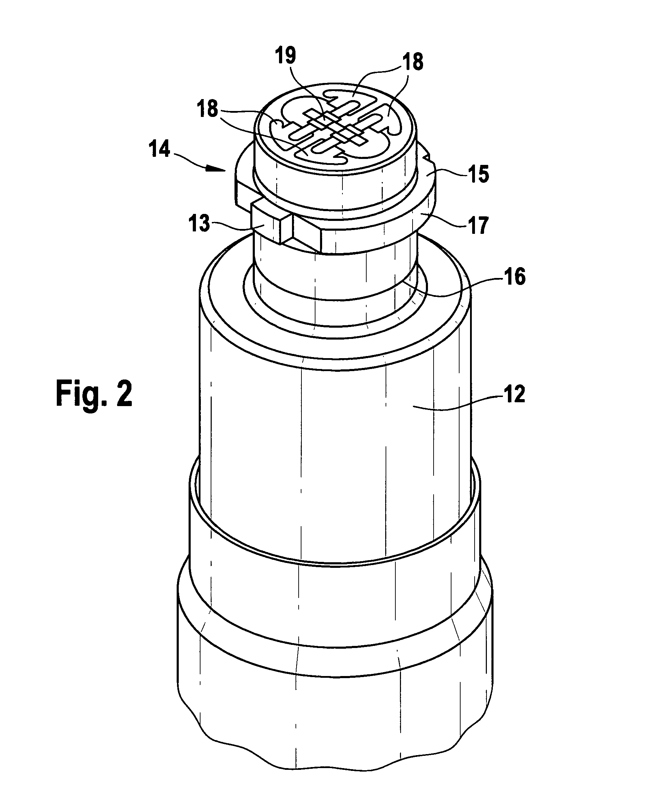

- Figur 2: eine perspektivische Darstellung des Polkerns mit aufgesetzter Druckmesszelle,

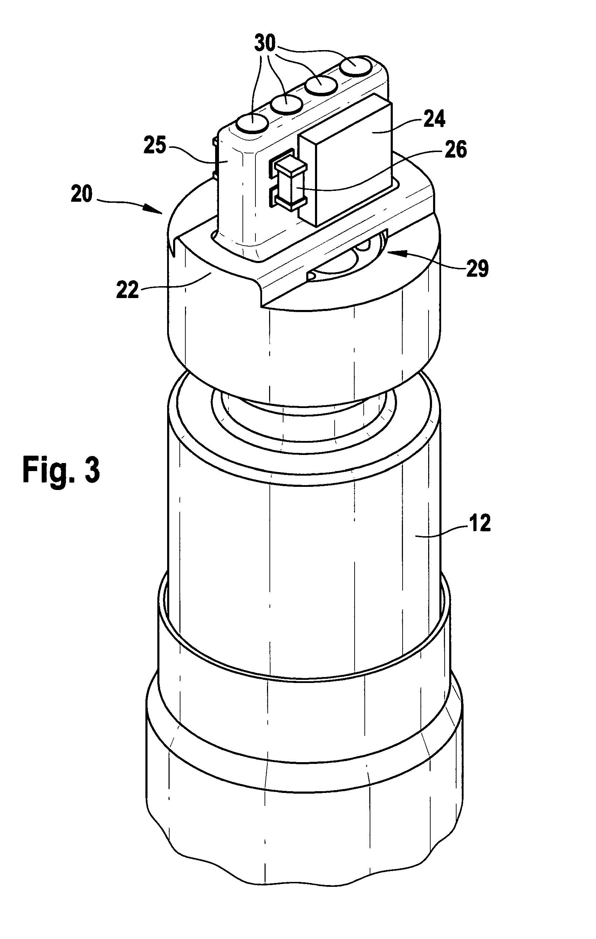

- Figur 3: eine perspektivische Darstellung des Polkerns mit auf der Druckmesszelle angeordnetem Schaltungsträger,
- Figur 4: eine genauere Darstellung des Schaltungsträgers mit Beschal- tung,
- Figur 5: eine perspektivische Darstellung des Schaltungsträgers in der Ansicht von unten,
- Figur 6: eine andere Ansicht des Schaltungsträgers mit Beschaltung,

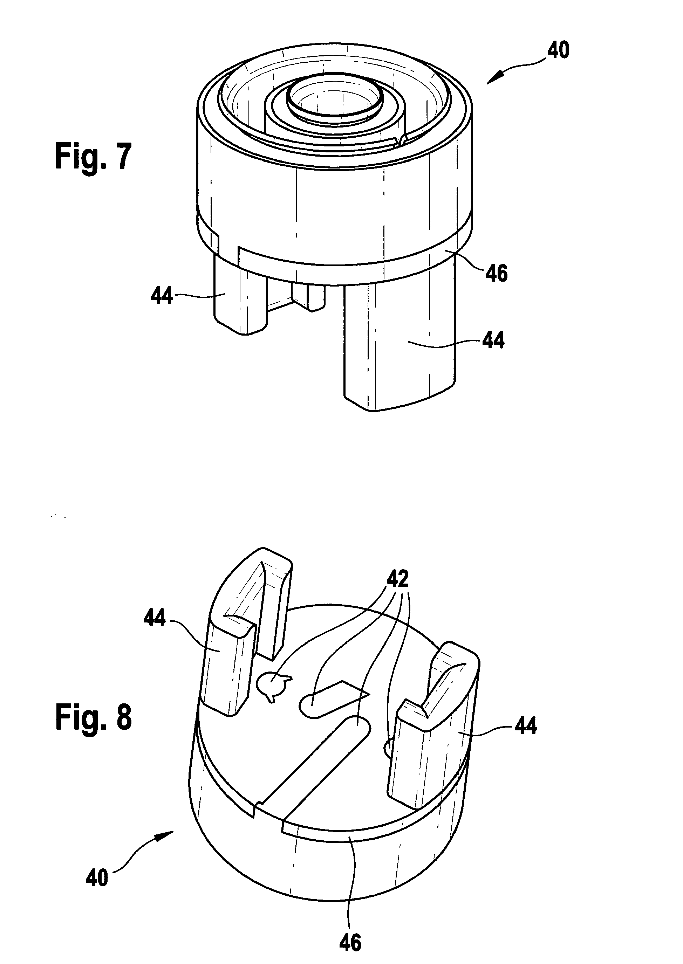

- Figur 7: eine perspektivische Darstellung des Steckers,
- Figur 8: die perspektivische Darstellung des Steckers in der Ansicht von unten,
- Figur 9: eine perspektivische Darstellung der Anordnung mit auf dem Schaltungsträger aufgesetztem Stecker,
- Figur 10: eine perspektivische Gesamtansicht des ventilintegrierten Druck- sensors,
- Figur 11: eine erste Schnittdarstellung des Drucksensors sowie
- Figur 12: eine gegenüber Figur 11 um 90° gedrehte zweite Schnittdarstel- lung des Drucksensors.

Der hydraulische Druck eines durch ein Magnetventil gesteuerten Fluids in einem Bremssystem wird durch eine auf dem Magnetventil sitzende Druckmesszelle 14 in ein elektrisches Signal umgesetzt. Hierzu ist die Druckmesszelle 14 auf einen Polkern 12 des Magnetventils so aufgesetzt, dass abhängig vom Druck des Fluids im Ventil eine Membran der Druckmesszelle 14 verformt wird. Die Verformung der Membran wird von einer Messbrücke 19 erfasst. Die Druckmesszelle 14 besteht aus einem Träger 15, welcher im Wesentlichen rohrförmig ausgebildet ist. Weiterhin weist der Träger 15 in seinem Mittelabschnitt einen Flansch 17 auf, welcher überwiegend ringförmig ausgeführt ist. Zur positionsgerechten Verbindung mit weiteren Bauteilen weist zumindest ein Abschnitt des Flansches 15 eine vorzugsweise rechteckförmige Nase 13 auf. An der im montierten Zustand vom Polkern 12 entfernten Seite der Druckmesszelle 14 sind vier elektrische Anschlusspunkte 18 auf der Messbrücke 19 vorgesehen, über die die Ausgangssignale der Messbrücke 19 abgegriffen werden können. Der Träger 15 der Druckmesszelle 14 ist so ausgeprägt, dass seine Innenseite mit der Oberseite des Polkerns 12 formschlüssig zusammenwirkt. Der Träger 15 wird auf den Polkern 12 aufgesetzt und durch eine Laserschweißung 16 druckdicht verbunden.

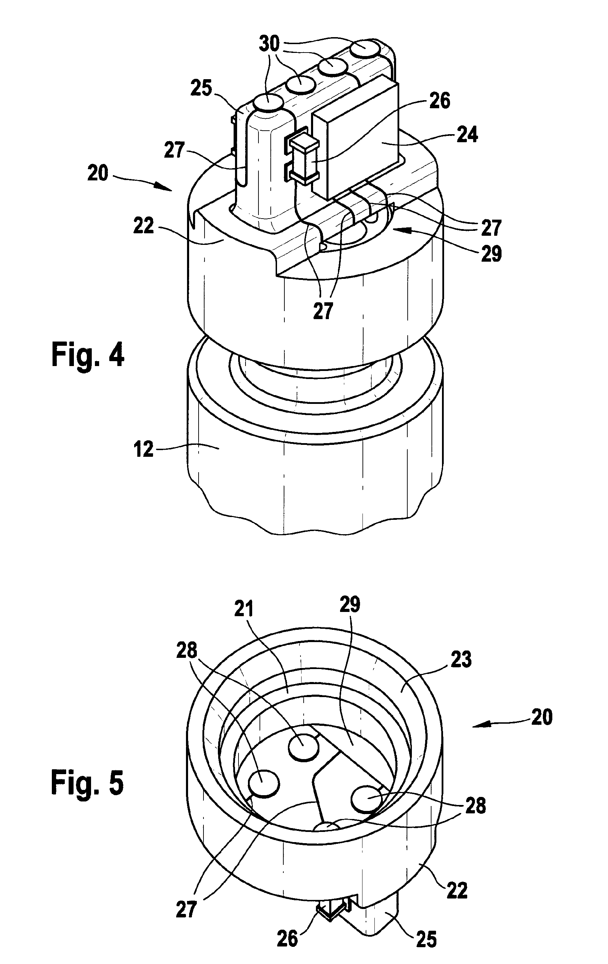

Auf die Druckmesszelle 14 wird ein Schaltungsträger 20 aufgesetzt. Der Schaltungsträger 20 ist ebenfalls im Wesentlichen ringförmig beziehungsweise kappenförmig ausgeführt mit einem fingerförmigen Fortsatz. Die Innenkontur des Schaltungsträgers 20 - wie in Figur 5 gezeigt - ist zur mechanischen Verbindung auf die Außenkontur des Trägers 15 der Druckmesszelle 14 abgestimmt. So weist der Schaltungsträger 20 im mittleren Bereich der zylinderförmigen Kontur eine Schulter 21 auf, welche im montierten Zustand auf dem Flansch 17 des Trägers 15 aufsitzt. Zur leichteren Montage kann die Unterseite des Schaltungsträgers 20 mit einer Abschrägung 23 versehen sein. Der ringförmige Bereich des Schaltungsträgers 20 wird zumindest teilweise über in eine Erhöhung 22 geschlossen. Die vorzugsweise rechteckförmig ausgebildete Erhöhung 22 erstreckt sich über den gesamten mittleren Bereich des ringförmigen Teils des Schaltungsträgers 22 und überdeckt somit im Wesentlichen die Oberseite und insbesondere die Anschlusspunkte 18 der Druckmesszelle 14. In diesem mittleren Bereich der Erhöhung 22 ist eine Ausnehmung 29 vorgesehen, so dass in diesem Bereich elektrische Verbindungen 27 zwischen den Anschlusspunkten 18 der Messbrücke 19 und elektronischen Bauteilen 26 und/oder der integrierten Schaltung 24 herausgeführt werden können.

Auf der Erhöhung 22 ist ein vorzugsweise rechteckförmiger Aufnahmebereich 25 angeordnet. Dieser sich in axialer Richtung erstreckende fingerförmige Aufnahmebereich 25 besitzt geringere Außenabmessungen als der ringförmige Abschnitt des Schaltungsträgers 20 und die Erhöhung 22. An den größeren Seitenflächen des Aufnahmebereichs 25 sind auf der einen Seite eine integrierte Schaltung 24 und ein elektronisches Bauteil 26 sowie auf der anderen Seite weitere elektronische Bauteile 26 als Beispiele für mögliche Beschaltungen angeordnet. Die Stirnseite des Aufnahmebereichs 25 wird durch vier Leitkleberpunkte 30 abgeschlossen. Die Bauteile 26, integrierte Schaltung 24, Anschlusspunkte 30 und Anschlusspunkte 28 sind durch geeignete elektrische Verbindungen 27 kontaktiert.

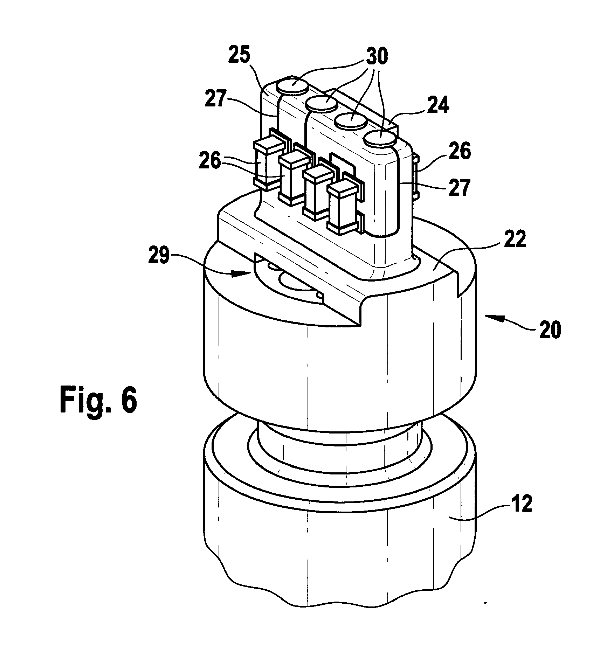

Gemäß Figur 5 werden zur Unterseite der Erhöhung 22 hin vier Leitkleberpunkte 28 sichtbar, über die eine elektrische Kontaktierung der Anschlusspunkte 18 der Druckmesszelle 14 bzw. der Messbrücke 19 erfolgen kann. Gemäß Figur 6 ist ersichtlich, dass auf der Rückseite des Aufnahmebereichs 25 weitere Bauteile 26 angeordnet und geeignet kontaktiert sind.

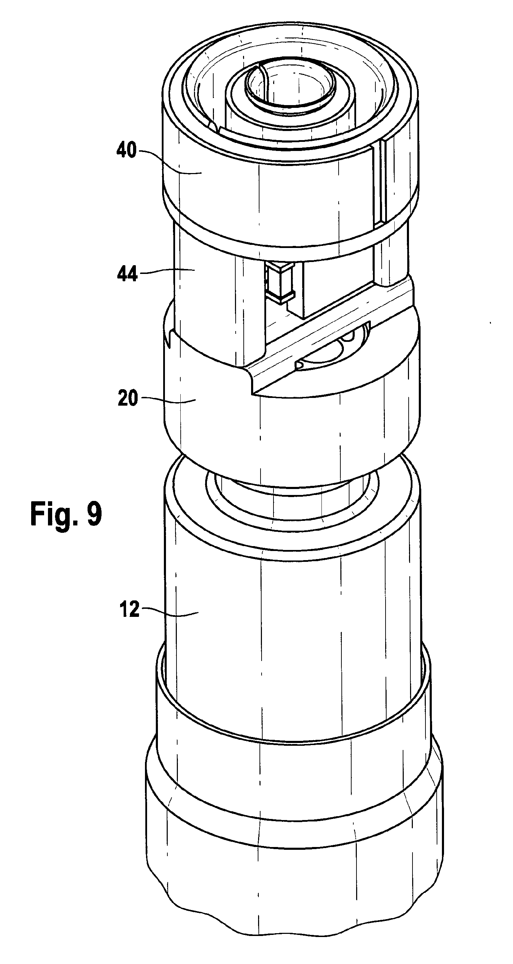

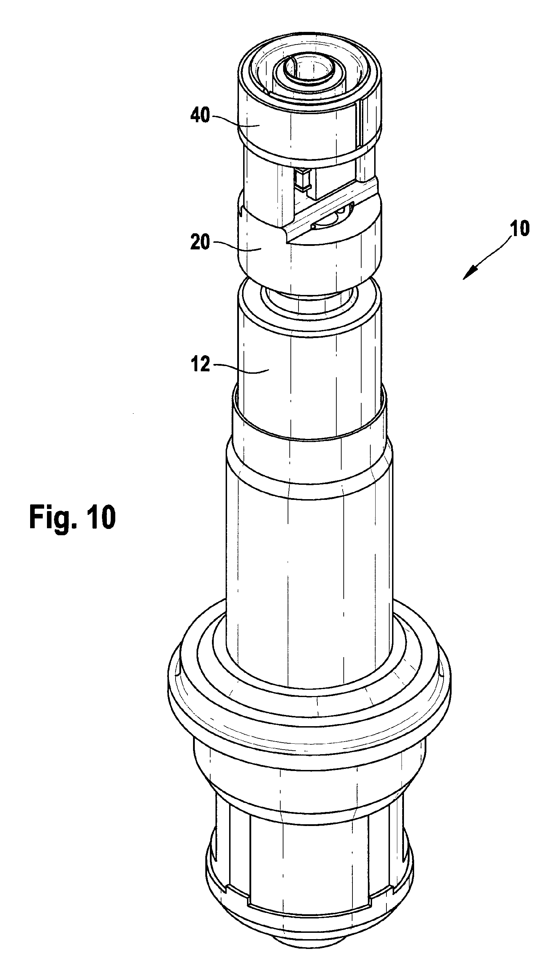

Eine weitere Komponente der Anschlusseinheit für einen Drucksensor 10 bildet ein Stecker 40. Dieser Stecker 40 ist beispielsweise als Koaxstecker ausgeführt. Auf der Rückseite der im Wesentlichen scheibenförmig ausgeführten Grundplatte des Steckers 40 sind jeweils am Rand zwei gegenüberliegende Seitenführungen 44 angeordnet, welche ein im Wesentlichen ein U-förmiges Profil aufweisen. Die Seitenführungen 44 sind auf das Außenprofil der Seitenflächen des Aufnahmebereichs 25 abgestimmt, um so mit dem Aufnahmebereich 25 eine feste Verbindung einzugehen. Weiterhin weist die scheibenförmige Grundplatte 46 des Steckers 40 vier Leitkleberstellen 42 auf, welche eine elektrische Durchkontaktierung der vier Leitkleberpunkte 30 des Schaltungsträgers 20 mit den Kontakten des Koaxsteckers 40 sicherstellen. In Figur 9 ist der Stecker 40 im montierten Zustand gezeigt. Figur 10 lässt sich eine perspektivische Darstellung sämtlicher Komponenten der Anschlusseinheit für den Drucksensor 10 entnehmen, wie sie auf einem Magnetventil angeordnet sind.

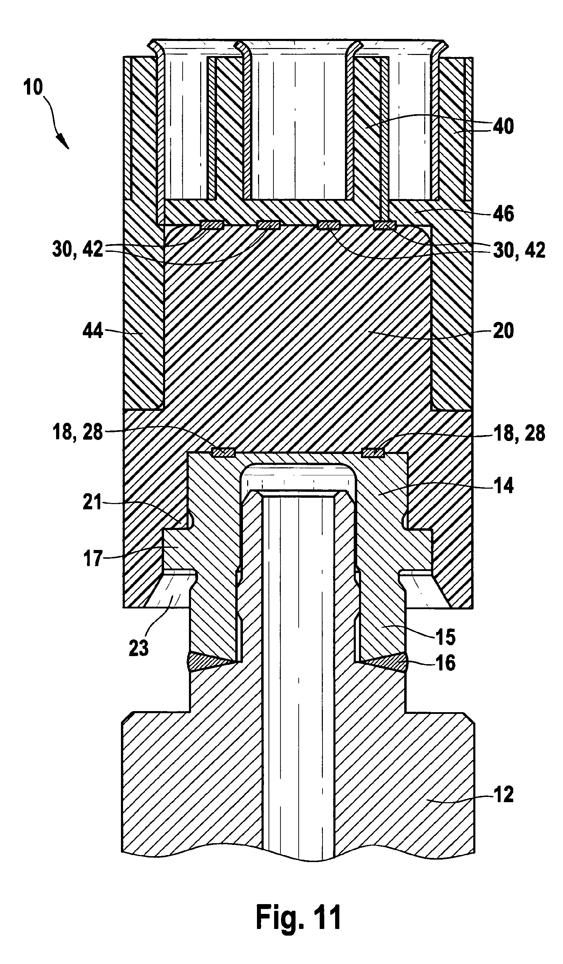

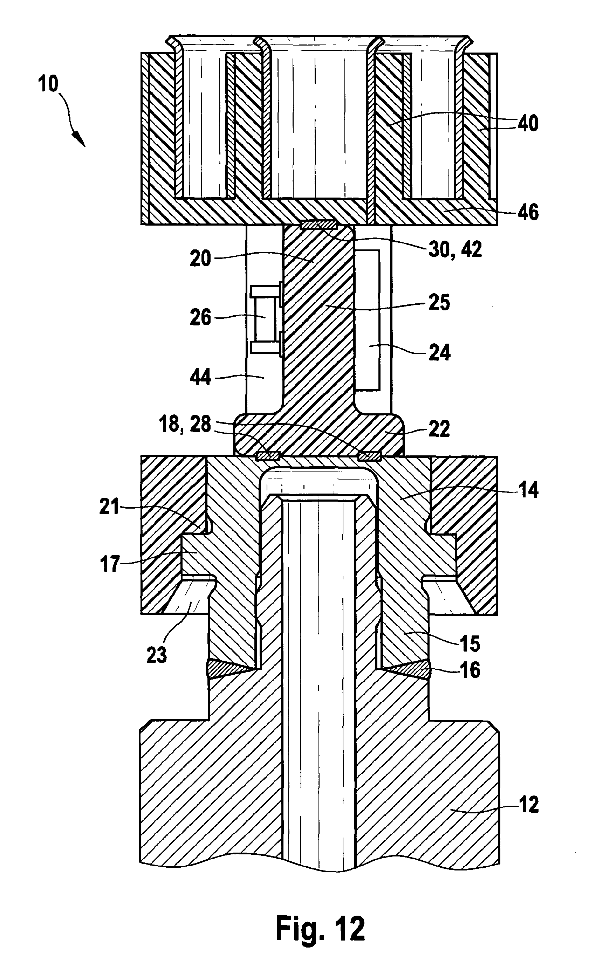

Zur weiteren Verdeutlichung dienen die Schnittdarstellungen nach den Figuren 11 und 12, welche den Drucksensor 10 im montierten Zustand zeigen. So liegt der Träger 15 auf einer Schulter des Polkerns 12 auf und ist an dieser Stelle durch eine Laserschweißung 16 mit dem Polkern 12 des Ventils druckdicht verbunden.

Auf den Träger 15 der Druckmesszelle 14 wird der Schaltungsträger 20 aufgesetzt, dessen Innenabmessungen auf die Außenkontur des Trägers 15 abgestimmt sind. So sitzt die Schulter 21 des Schaltungsträgers 20 auf dem Flansch 17 auf wird zur mechanischen Fixierung verklebt. Durch die Leitkleberpunkte 28 wird eine elektrische Kontaktierung hergestellt zwischen den Anschlusspunkten 18 der Messbrücke 19 und den elektrischen Verbindungen 27, über die die Ausgangssignale der Messbrücke 19 über die elektronischen Bauteile 26 und die integrierte Schaltung 24 entsprechend aufbereitet zur den Leitkleberpunkten 30 weitergeführt werden. Durch entsprechende Durchkontaktierungen lassen sich die an den Leitkleberpunkten 30 anstehenden Signale am Koaxstecker 40 durch ein nicht gezeigtes Steckergegenstück abgreifen und beispielsweise zu einem Steuergerät weiterführen.

Auf den Schaltungsträger 20 wird der Stecker 40 aufgesetzt. Hierzu werden die Seitenführungen 44 mit den Seitenflächen des Aufnahmebereichs 25 in Eingriff gebracht und nach unten geschoben, bis die Stirnseiten der Seitenführungen 44 mit der Oberseite der Erhöhung 22 in Kontakt kommen. Anschließend wird der Stecker 40 mittels Leitkleber mit dem Schaltungsträger 20 elektrisch und mechanisch kontaktiert, indem die Leitkleberpunkte 30 des Schaltungsträgers 20 mit den Leitkleberpunkten 42 des Steckers 40 durch Leitkleber miteinander verbunden werden.

Der hydraulische Druck in einem Bremssystem wird durch die auf dem Magnetventil sitzende Druckmesszelle 14 in ein elektrisches Signal umgesetzt. Das elektrische Signal wird durch die integrierte Schaltung 24 und die elektronischen Bauteile 26 aufbereitet und verstärkt an ein Steuergerät weitergeleitet. Die Druckmesszelle 14 weist eine Membran auf, die den Druck des in dem Ventil befindlichen Fluids erfasst. Im Inneren des Polkerns 12 des Ventils ist ein mit Fluid gefüllter Kanal ausgebildet, der durch die Membran druckdicht verschlossen wird. Die Druckverhältnisse der Membran werden durch die Messbrücke 19 in entsprechende elektrischen Signale umgesetzt. Hierzu könnte die Messbrücke 19 in Metalldünnschichttechnik ausgebildet sein. Die Druckmesszelle 14 wird druckdicht mit dem Polkern 12 des Ventils laserverschweißt. Auf die Druckmesszelle 14 wird der Schaltungsträger 20 aufgeklebt. Der Schaltungsträger 20 ist als spritzgegossener Schaltungsträger aus Kunststoff in MID-Technik (Moulded Interconnect Device) hergestellt. Bei der MID-Technik lassen sich dreidimensionale Schaltungsstrukturen realisieren. Hierzu werden zu metallisierende Bereiche hierzu mit einem Laser aktiviert (Laserdirektstrukturierung LDS). Diese laseraktivierten Bereiche werden in einem nachträglichen Galvanikprozess galvanisiert, so dass auf dem Schaltungsträger 20 in MID-Technik dreidimensionale Leiterbahnen entstechen. Der Schaltungsträger 20 in MID-Ausführung wird bestückt mit der integrierten Schaltung 24, bei der es sich beispielsweise um ein ASIC in FlipChip-Technik handeln kann. Weiterhin werden auf dem Schaltungsträger 20 weitere benötigte elektronische Bauteile 26 wie Widerstände oder Kondensatoren aufgebracht. Auf den Schaltungsträger 20 wird ebenfalls mit einem Leitkleber, beispielsweise Silberleitkleber, der Stecker 40 aufgeklebt. Der Stecker 40 ist beispielsweise als Miniatur-Koax-Stecker ausgeführt. Über diesen Stecker 40 kann ein Anbausteuergerät angeschlossen werden. Dieses Anbausteuergerät übernimmt beispielsweise die Ansteuerung des Magnetventils bzw. Auswertung der vom Drucksensor 10 gelieferten Daten und kann Bestandteil einer Fahrdynamikregelung, Antischlupfregelung oder eines Antiblockiersystems sein.

## Patentansprüche

1. Anschlusseinheit für eine Druckmesszelle umfassend
zumindest eine Druckmesszelle (14) mit einem Träger (15) der im Wesentlichen ringförmig ausgebildet ist und derart ausgeprägt ist, dass seine Innenseite mit einer Oberseite eines Polkems (12) eines Ventils formschlüssig zusammenwirkt, wenn der Träger (15) auf den Polkern (12) aufgesetzt ist, wobei die Druckmesszelle (14) zumindest einen Anschlusspunkt (18) aufweist, über den zumindest ein elektrisches Ausgangssignal der Druckmesszelle (14) abgreifbar ist,
mit zumindest einem Schaltungsträger (20), der auf den Träger (15) der Druckmesszelle (14) aufgesetzt ist, wobei der Schaltungsträger (20) zumindest einen ringförmigen Abschnitt aufweist, der die Druckmesszelle (14) zumindest teilweise umschließt, wobei auf dem Schaltungsträger (20) zumindest eine Schaltung (24) und/oder ein elektronisches Bauteil (26) angeordnet ist, wobei die Schaltung (24) und/oder das elektronische Bauteil (26) mit dem Anschlusspunkt (18) der Druckmesszelle (14), über zumindest einen Leitkleberpunkt (28) elektrisch kontaktiert ist,
mit zumindest einem Stecker (40), der auf den Schaltungsträger (20) aufgesetzt ist, wobei über den Stecker (40) zumindest ein elektrisches Ausgangssignal der Schaltung (24) und/oder dem elektronischen Bauteil (26) abgreifbar ist.

2. Anschlusseinheit nach einem der vorhergehenden Ansprüche, **dadurch gekennzeichnet, dass** der Schaltungsträger (20) zumindest eine vorzugsweise rechteckförmige Erhöhung (22) aufweist, die zumindest teilweise den Anschlusspunkt (18) der Druckmesszelle (14) überdeckt.

3. Anschlusseinheit nach Anspruch 2, **dadurch gekennzeichnet, dass** die vorzugsweise rechteckförmige Erhöhung (22) zumindest eine Ausnehmung (29) aufweist, über die zumindest eine elektrische Verbindung (27) vom Anschlusspunkt (18) zu Schaltung (24) und/oder elektronischem Bauteil (26) herausgeführt ist.

4. Anschlusseinheit nach einem der vorhergehenden Ansprüche, **dadurch gekennzeichnet, dass** der Schaltungsträger (20) einen vorzugsweise rechteckförmigen Aufnahmebereich (25) aufweist, an dem Schaltung (24) und/oder elektronisches Bauteils (26) angeordnet sind.

5. Anschlusseinheit nach Anspruch 4, **dadurch gekennzeichnet, dass** an der Stirnseite des vorzugsweise rechteckförmigen Aufnahmebereichs (25) zumindest ein Leitkleberpunkt (30) angeordnet ist, über den ein Ausgangssignal der Schaltung (24) und/oder elektronischen Bauteils (26) abgreifbar ist.

6. Anschlusseinheit nach wenigstens Anspruch 5, **dadurch gekennzeichnet**, der Stecker (40) zumindest ein Leiterkleberpunkt (42) vorgesehen ist, der mit dem Leitkleberpunkt (30) des Schaltungsträgers (20) durch Leitkleber verbunden ist.

7. Anschlusseinheit nach wenigstens Anspruch 4, **dadurch gekennzeichnet, dass** der Außendurchmesser des ringförmigen Abschnitts des Schaltungsträgers (20) größer ist als die Außenabmessungen des vorzugsweise rechteckförmigen Aufnahmebereichs (25).

8. Anschlusseinheit nach einem der vorhergehenden Ansprüche, **dadurch gekennzeichnet, dass** der Stecker (40) zumindest eine Seitenführung (44) aufweist, welche auf die Außenkontur einer Seitenfläche des Schaltungsträgers (20) zum Eingehen einer mechanischen Verbindung abgestimmt ist.

9. Anschlusseinheit nach einem der vorhergehenden Ansprüche, **dadurch gekennzeichnet, dass** der Schaltungsträger (20) in MID-Technik hergestellt ist.

10. Anschlusseinheit nach einem der vorhergehenden Ansprüche, **dadurch gekennzeichnet, dass** der Schaltungsträger (20) zumindest eine Schulter (21) aufweist, die zur Befestigung beispielsweise durch Verkleben mit einem Flansch (17) der Druckmesszelle (14) zusammenwirkt.

11. Anschlusseinheit nach einem der Ansprüche 4 bis 10, **dadurch gekennzeichnet, dass** der Schaltungsträger (20) zumindest eine Nut aufweist, die zur lagegerechten Positionierung mit einer Nase (13) der Druckmesszelle (14) zusammenwirkt.

## Claims

1. Connection unit for a pressure measurement cell comprising
at least one pressure measurement cell (14) having a support (15) which is substantially annular and is formed in such a way that its inner face interacts in an interlocking manner with an upper face of a pole core (12) of a valve when the support (15) is mounted on the pole core (12), with the pressure measurement cell (14) having at least one connection point (18) via which at least one electrical output signal from the pressure measurement cell (14) can be tapped off,
having at least one circuit mount (20) which is mounted on the support (15) of the pressure measurement cell (14), with the circuit mount (20) having at least one annular section which at least partially surrounds the pressure measurement cell (14), with at least one circuit (24) and/or an electronic component (26) being arranged on the circuit mount (20), with the connection point (18) of the pressure measurement cell (14) making electrical contact with the circuit (24) and/or the electronic component (26) via at least one conductive adhesive point (28),
having at least one plug (40) which is mounted on the circuit mount (20), it being possible for at least one electrical output signal from the circuit (24) and/or the electronic component (26) to be tapped off via the plug (40).

2. Connection unit according to Claim 1, **characterized in that** the circuit mount (20) has at least one preferably rectangular raised portion (22) which at least partially covers the connection point (18) of the pressure measurement cell (14).

3. Connection unit according to Claim 2, **characterized in that** the preferably rectangular raised portion (22) has at least one recess (29) via which at least one electrical connection (27) is routed from the connection point (18) to the circuit (24) and/or electronic component (26).

4. Connection unit according to one of the preceding claims, **characterized in that** the circuit mount (20) has a preferably rectangular accommodation region (25) on which the circuit (24) and/or electronic component (26) are arranged.

5. Connection unit according to Claim 4, **characterized in that** at least one conductive adhesive point (30) is arranged on the end face of the preferably rectangular accommodation region (25), it being possible for an output signal from the circuit (24) and/or electronic component (26) to be tapped off via the said conductive adhesive point.

6. Connection unit according at least to Claim 5, **characterized in that** the plug (40) is provided with at least one conductor adhesive point (42) which is connected to the conductive adhesive point (30) of the circuit mount (20) by means of conductive adhesive.

7. Connection unit according at least to Claim 4, **characterized in that** the outside diameter of the annular section of the circuit mount (20) is larger than the outside dimensions of the preferably rectangular accommodation region (25).

8. Connection unit according to one of the preceding claims, **characterized in that** the plug (40) has at least one lateral guide (44) which is matched to the outside contour of a lateral surface of the circuit mount (20) for establishing a mechanical connection.

9. Connection unit according to one of the preceding claims, **characterized in that** the circuit mount (20) is produced using MID technology.

10. Connection unit according to one of the preceding claims, **characterized in that** the circuit mount (20) has at least one shoulder (21) which interacts with a flange (17) of the pressure measurement cell (14) for fastening purposes, for example by adhesive bonding.

11. Connection unit according to one of Claims 4 to 10, **characterized in that** the circuit mount (20) has at least one groove which interacts with a lug (13) of the pressure measurement cell (14) for the purpose of correct positioning.

## Revendications

1. Unité de raccordement pour cellule de mesure de pression, comprenant
au moins une cellule (14) de mesure de pression qui présente un support (15) de forme essentiellement annulaire et qui est façonnée de telle sorte que son côté intérieur coopère avec le côté supérieur d'une âme polaire (12) d'une soupape lorsque le support (15) est placé sur l'âme polaire (12), la cellule (14) de mesure de pression présentant au moins un point de raccordement (18) par lequel au moins un signal électrique de sortie de la cellule (14) de mesure de pression peut être prélevé,
au moins un porte-circuit (20) placé sur le support (15) de la cellule (14) de mesure de pression, le porte-circuit (20) présentant au moins une partie annulaire qui entoure au moins en partie la cellule (14) de mesure de pression, au moins un circuit (24) et/ou un composant électronique (26) étant disposés sur le porte-circuit (20), le circuit (24) et/ou le composant électronique (26) étant mis en contact électrique avec le point de raccordement (18) de la cellule (14) de mesure de pression par l'intermédiaire d'au moins un point (28) d'adhésif conducteur,
au moins une fiche (40) placée sur le porte-circuit (20), au moins un signal électrique de sortie du circuit (24) et/ou du composant électronique (26) pouvant être prélevé par l'intermédiaire de la fiche (40).

2. Unité de raccordement selon la revendication 1, **caractérisée en ce que** le porte-circuit (20) présente au moins une saillie (22) de préférence de forme rectangulaire qui recouvre au moins une partie du point de raccordement (18) de la cellule (14) de mesure de pression.

3. Unité de raccordement selon la revendication 2, **caractérisée en ce que** la saillie (22) de préférence de forme rectangulaire présente au moins une découpe (29) par laquelle au moins une liaison électrique (27) peut partir du point de raccordement (18) vers le circuit (24) et/ou le composant électronique (26).

4. Unité de raccordement selon l'une des revendications précédentes, **caractérisée en ce que** le porte-circuit (20) présente une partie de réception (25) de préférence de forme rectangulaire sur laquelle le circuit (24) et/ou le composant électronique (26) sont disposés.

5. Unité de raccordement selon la revendication 4, **caractérisée en ce qu'**au moins un point (30) d'adhésif conducteur par lequel un signal de sortie du circuit (24) et/ou du composant électronique (26) peut être prélevé est disposé sur le côté frontal de la partie de réception (25) de préférence de forme rectangulaire.

6. Unité de raccordement selon au moins la revendication 5, **caractérisée en ce que** la fiche (40) présente au moins un point (42) d'adhésif conducteur relié par un adhésif conducteur au point (30) d'adhésif conducteur du porte-circuit (20).

7. Unité de raccordement selon au moins la revendication 4, **caractérisée en ce que** le diamètre extérieur de la partie annulaire du porte-circuit (20) est supérieur aux dimensions extérieures de la partie de réception (25) de préférence de forme rectangulaire.

8. Unité de raccordement en ce que la fiche (40) présente au moins un guide latéral (44) qui est défini sur le contour extérieur d'une surface latérale du porte-circuit (20) pour permettre une liaison mécanique.

9. Unité de raccordement en ce que le porte-circuit (20) est fabriqué par la technique dite MID.

10. Unité de raccordement en ce que le porte-circuit (20) présente au moins un épaulement (21) qui coopère avec une bride (17) de la cellule (14) de mesure de pression dans une fixation, par exemple par collage.

11. Unité de raccordement selon l'une des revendications 4 à 10, **caractérisée en ce que** le porte-circuit (20) présente au moins une rainure qui coopère avec un bec (13) de la cellule (14) de mesure de pression pour assurer son positionnement correct.
